(19) **Europäisches Patentamt** / **European Patent Office** / **Office européen des brevets**

(11) **EP 4 502 409 A1**

(12) # EUROPEAN PATENT APPLICATION
published in accordance with Art. 153(4) EPC

(43) Date of publication:
**05.02.2025 Bulletin 2025/06**

(21) Application number: **23780540.3**

(22) Date of filing: **28.03.2023**

(51) International Patent Classification (IPC):
**F16C 33/12** $^{(2006.01)}$    **F16C 33/14** $^{(2006.01)}$
**C23C 4/131** $^{(2016.01)}$    **B23K 9/04** $^{(2006.01)}$

(52) Cooperative Patent Classification (CPC):
**F16C 33/125; B23K 9/04; C23C 4/131; F16C 29/02;**
**F16C 33/12; F16C 33/121; F16C 33/14;**
F05B 2260/4031; F16C 2202/04; F16C 2220/20;
F16C 2223/42; F16C 2223/46; F16C 2360/31;
F16C 2361/61

(86) International application number:
**PCT/JP2023/012552**

(87) International publication number:
**WO 2023/190531 (05.10.2023 Gazette 2023/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.03.2022 JP 2022056211**

(71) Applicant: **Daido Metal Company Ltd.
Nagoya-shi, Aichi 460-0008 (JP)**

(72) Inventors:
• **ASABA, Ryo
Inuyama-shi, Aichi 484-0061 (JP)**
• **NAKAI, Masahiro
Inuyama-shi, Aichi 484-0061 (JP)**

(74) Representative: **Schulz Junghans
Patentanwälte PartGmbB
Großbeerenstraße 71
10963 Berlin (DE)**

(54) **SLIDING MEMBER, GEAR BOX USING SAME, WIND POWERED GENERATOR, AND METHOD FOR MANUFACTURING SLIDING MEMBER**

(57) A sliding member includes a base material; and a sliding layer that is laminated on the base material and has a matrix and particle phases uniformly and finely dispersed in the matrix. An arbitrary observation cross section is set in the sliding layer, and area rates Sv of the particle phases in the plurality of arbitrary observation regions extracted from the observation cross section are $0.2\% \leq Sv \leq 5\%$ in all of the observation regions. A maximum particle diameter Da of the particle phases is $0\ \mu m < Da \leq 30\ \mu m$.

Fig.10

**EP 4 502 409 A1**

**Description**

Cross Reference to Related Applications

The present application is based on Japanese Patent Application No. 2022-056211, filed on March 30, 2022, the content of which is incorporated herein by reference.

Technical Field

The present disclosure relates to a sliding member, a gear box using the same, a wind powered generator, and a method for manufacturing a sliding member.

Background Art

Conventionally, formation of a sliding member by arc welding is known (Patent Literature 1). In Patent Literature 1, a Cu-Sn-Pb alloy is laminated as a sliding layer on the surface of a back metal by arc welding. At this time, the sliding layer is formed using a powder containing Pb dispersed in advance in an alloy matrix. In Patent Literature 1, this reduces the evaporation of Pb caused by a high temperature during the welding and forms a structure in which Pb is uniformly dispersed in the sliding layer.

In recent years, for bearings in which a sliding member is used, there has been a demand for improvement in sliding characteristics in a high surface pressure environment due to a request of the additional reduction of a load on the environment and the like. Therefore, efforts are being made to improve the properties of the sliding layer by adding, for example, a low-melting point metal, a hard material or the like as an additive to the matrix. In this case, the sliding layer can be formed by, for example, performing welding using a powder or wire containing the additive added in advance to the matrix.

However, the low-melting point metal added to the matrix is likely to cause evaporation during welding and has a problem of causing a defect or segregation in the matrix of the sliding layer. In addition, the hard material added to the matrix is likely to cause aggregation during welding and has a problem in that uniform dispersion in the matrix is difficult. The uneven distribution of hard particles in the sliding layer has a problem of causing a decrease in the strength of the sliding layer and the deterioration of the sliding characteristics.

Citation List

Patent Literature

Patent Literature 1: Japanese Patent Laid-Open No. 04-300073

Summary of Invention

Therefore, an objective of the present disclosure is to provide a sliding member containing the particles of an additive uniformly dispersed in a sliding layer and having high sliding characteristics without impairing the strength, a gear box using the same, and a wind powered generator.

In addition, another objective of the present disclosure is to provide a method for manufacturing a sliding member in which the evaporation of an additive is reduced, the additive is uniformly dispersed and the sliding characteristics are further improved.

A sliding member according to one embodiment of the present disclosure is a sliding member including a base material; and a sliding layer that is laminated on the base material and has a matrix and particle phases uniformly and finely dispersed in the matrix.

That is, in the sliding member of one embodiment, the area rates Sv of the particle phases are all $0.2\% \leq Sv \leq 5\%$ in a plurality of arbitrary observation regions extracted from an arbitrary observation cross section. As such, in the sliding member of one embodiment, the particle phases are uniformly present in the matrix of the sliding layer. In addition, a maximum particle diameter Da of the particle phases is refined to be $0\ \mu m < Da \leq 30\ \mu m$. Therefore, the particles of the additive uniformly and finely disperse in the sliding layer, and it is possible to enhance the sliding characteristics without impairing the strength. In particular, the sliding member of one embodiment is capable of enhancing seizure resistance and wear resistance.

In a method for manufacturing the sliding member according to one embodiment of the present disclosure, the sliding layer is formed by arc welding of a wire to the base material. This method for manufacturing a sliding member includes a step of supplying the wire that is to turn into a matrix configuring the sliding layer; a step of melting the supplied wire by discharge with the base material to form a droplet; and a step of adding an additive that is to be added to the matrix to the formed droplet.

Therefore, the additive is mixed into the droplets of the molten wire. That is, in the present embodiment, the additive is added not to molten pools that are formed in the base material by an arc between the base material and the wire but to the droplets that are formed in the wire. Therefore, the additive uniformly and finely disperses in the droplets and uniformly and finely disperses in the sliding layer that is formed by the solidification of the droplets. This is because the droplets are rapidly cooled by the dropping of the droplets into the base material. That is, the additive added to the droplets is uniformly and finely mixed with droplets having a relatively small volume, then, drops into the base material to be cooled and solidifies while maintaining the uniformly and finely mixed state. In addition, the additive is added to the droplets, whereby the mixing between the base material and the additive is reduced compared with a case where the additive is added to molten pools. Furthermore, the additive is added to the droplets having a relatively small thermal capacity as in the present embodiment, whereby the additive is rapidly cooled in a state of being dispersed in the droplets, and a defect that is accompanied by the evaporation of the additive is also reduced. Therefore, it is possible to further improve the sliding performance.

In a method for manufacturing a sliding member according to another embodiment, the additive that is to be added to the matrix is added to the droplet as a particle, a powder containing the particle, a wire containing the particle or a bar containing the particle.

Brief Description of Drawings

[Figure 1] Figure 1 is a pattern diagram showing a welding device for manufacturing a sliding member according to one embodiment.

[Figure 2] Figure 2 is a pattern diagram showing the welding device for manufacturing the sliding member according to one embodiment.

[Figure 3] Figure 3 is a pattern diagram showing a sliding member according to one embodiment.

[Figure 4] Figure 4 is a schematic cross-sectional view showing the structure of the sliding member according to one embodiment.

[Figure 5] Figure 5 is a pattern diagram showing the flow of a method for manufacturing a sliding member according to one embodiment.

[Figure 6] Figure 6 is a pattern diagram showing the flow of the method for manufacturing a sliding member according to one embodiment.

[Figure 7] Figure 7 is a pattern diagram showing the flow of the method for manufacturing a sliding member according to one embodiment.

[Figure 8] Figure 8 is a schematic cross-sectional view showing a rotary member to which the sliding member according to one embodiment is applied.

[Figure 9] Figure 9 is an enlarged schematic cross-sectional view of an IX part in Figure 3.

[Figure 10] Figure 10 is a pattern diagram showing observation regions that are included in an observation cross section of Figure 9.

[Figure 11] Figure 11 is a pattern diagram showing a test piece of the sliding member according to one embodiment.

[Figure 12] Figure 12 is a pattern diagram seen in an arrow XII direction in Figure 11.

[Figure 13] Figure 13 is a pattern diagram showing a testing apparatus configured to perform the seizure test and the wear test of the sliding member according to one embodiment.

[Figure 14] Figure 14 is a pattern diagram of the test piece mounted in the testing apparatus seen in an XIV direction in Figure 13.

[Figure 15] Figure 15 is a schematic view showing the test conditions of the seizure test.

[Figure 16] Figure 16 is a schematic view showing the test conditions of the wear test.

[Figure 17] Figure 17 is a schematic view showing the test results of Examples.

[Figure 18] Figure 18 is a schematic view showing the test results of Comparative Examples.

Description of Embodiment

Hereinafter, an embodiment will be described based on drawings.

(Welding device)

First, a welding device for manufacturing a sliding member will be described.

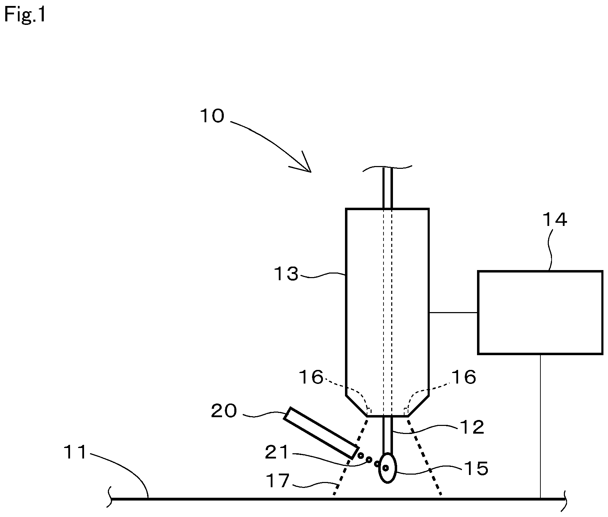

As shown in Figure 1, a welding device 10 is a so-called arc welding device in which discharge between a base material 11 and a wire 12 is used. The welding device 10 includes a wire supply part 13. The wire supply part 13 supplies the wire 12, which is a consumable electrode, while repeatedly moving toward the base material 11 side and moving toward the opposite side periodically according to a preset cycle and a preset movement amount. The wire supply part 13 and the base material 11 are electrically connected to each other through a power supply device 14. The power supply device 14 applies a preset voltage between the wire supply part 13 and the base material 11. The wire 12 comes into contact with the wire supply part 13 and thereby has the same potential as the wire supply part 13. Therefore, when the base material 11 and the wire 12 come close to each other, an arc state is formed, and, when the base material 11 and the wire 12 come into contact with each other, a short-circuit state is formed. An arc state and a short-circuit state are repeatedly generated between the base material 11 and the wire 12 by making the wire 12 advance and retreat with the wire supply part 13.

When the front end of the wire 12 is made to come close to the base material 11 with the wire supply part 13, an arc is generated between the wire 12 and the base material 11. The wire 12 is instantly heated by the generated arc and melted. The molten wire 12 turns into a droplet 15 and drops toward the base material 11 side. When the droplet 15 of the molten wire 12 comes into contact with the base material 11, the base material 11 and the wire 12 are short-circuited, electrical conduction between the base material 11 and the wire 12 is paused, and the droplet 15 transfers to the base material 11. That is, the wire 12 is laminated on the base material 11 by the transfer of the droplet by arc welding. When the front end of the wire 12 is made to come apart from the base material 11 with the wire supply part 13, the base material 11 and the wire 12 are separated from each other, and an arc is generated between the base material 11 and the wire 12 again. When this process is repeated, a welding layer is formed on the base material 11 with a material that configures the wire 12.

The wire supply part 13 has a gas exhaust nozzle 16. The wire supply part 13 injects a shielding gas 17 from the gas exhaust nozzle 16. The shielding gas 17 contains an inert gas, for example, argon or helium, as a main component and oxygen or the like as an additive. The gas exhaust nozzle 16 injects the shielding gas 17 so as to surround the vicinity of a weld zone where the base material 11 and the wire 12 come into contact with each other. Therefore, the weld zone of the base material 11 and the wire 12 is shielded from outside air with the shielding gas 17. As the shielding gas 17, $O_2$-containing Ar, 100% Ar, $CO_2$, Ar + $CO_2$, Ar + He or the like can be used.

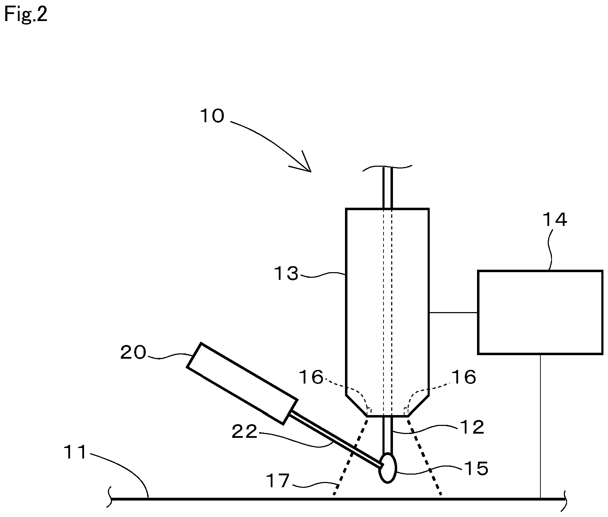

The welding device 10 includes, in addition to the above-described parts, an additive supply part 20. The additive supply part 20 supply an additive 21 to the droplet 15 formed by the are between the base material 11 and the wire 12. In the present embodiment, the additive supply part 20 supplies the additive 21 not to a molten pool formed on the base material 11 side by the arc between the base material 11 and the wire 12 but to the droplet 15 formed on the wire 12 side. As shown in Figure 1, the additive supply part 20 supplies the powdery additive 21 to the droplet 15. In addition, the additive supply part 20 may be configured to supply a wire 22 containing the additive 21 to the droplet 15 as shown in Figure 2. Furthermore, the additive supply part 20 is not limited to these examples shown in Figure 1 and Figure 2 and may be configured to supply a bar containing the additive 21 or the like to the droplet 15.

As described above, in the case of the present embodiment, the welding device 10 includes the additive supply part 20. Therefore, the additive 21 is supplied to the droplet 15 that is formed of the wire 12 melted by the arc between the base material 11 and the wire 12.


(Method for Manufacturing Sliding Member and Sliding Member)

Next, a method for manufacturing a sliding member using the above-described welding device and a sliding member that is obtained by the method will be described.

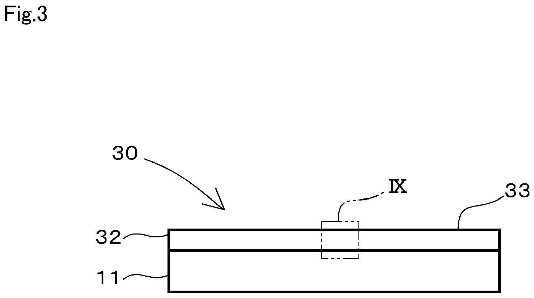

As shown in Figure 3, a sliding member 30 includes the base material 11 and a sliding layer 32. The sliding member 30 slides over a mating material, not shown. The mating material is formed of, for example, a Fe-based material such as steel or stainless steel. The sliding layer 32 forms a sliding surface 33 on the surface opposite to the base material 11. The base material 11 is formed of, for example, a metal such as Fe or Cu or an alloy thereof. The sliding layer 32 is formed on the surface of this base material 11 by welding. Specifically, the sliding layer 32 is formed of the wire 12 as a main material by welding the wire 12 to the base material 11 as shown in Figure 1. The sliding layer 32 is an alloy containing one element of Cu, Al and Sn as a first component. That is, the matrix of the alloy that configures the sliding layer 32 is formed of the wire 12. The first component refers to an element having a highest content rate in the alloy that configures the sliding layer 32. For example, in a case where the sliding layer 32 is formed of a Cu alloy, the wire 12 is formed of the same Cu alloy as this sliding layer 32.

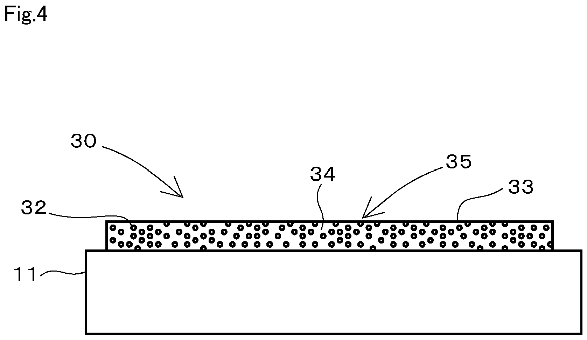

As shown in Figure 4, the sliding layer 32 has particle phases 35 uniformly and finely dispersed in a matrix 34. That is, the sliding layer 32 has the matrix 34 and the particle phases 35 uniformly and finely dispersed in this matrix 34. The particle phases 35 include high-hardness phases. The high-hardness phase is a phase of a particle having higher hardness than the matrix 34. The high-hardness phase is, for example, at least one element selected from Ni, Sn, Mo, C, B, Si, Mn, Fe, P, Ti, Al, W, Cr, Sc, Zr, Co, Cu and the like, a compound thereof or a compound of the element thereof and O, N or the like.

When the Vickers hardness of the high-hardness phase that configures the particle phases 35 is indicated by HV1 and the Vickers hardness of the matrix 34 is indicated by HV2, there is a relationship of $5 \leq HV1/HV2 \leq 50$ therebetween. That is, the Vickers hardness HV of the high-hardness phase that configures the particle phases 35 is 5 to 50 times that of the matrix 34. When the hardness of the high-hardness phase is set as described above with respect to the matrix 34, it is possible to reduce aggressiveness toward the mating material while improving the seizure resistance and the wear resistance.

In addition, the particle phases 35 may include low-hardness phases. The low-hardness phase is a phase of a particle having lower hardness than the matrix 34. The low-hardness phase is, for example, at least one element selected from Pb, Bi, Sn, Sb, In, Mg, Al, Zn and the like or a compound thereof. In this case, in a plurality of observation regions set in an arbitrary observation cross section, the area rate Sv of the particle phases 35 is $0.2\% \leq Sv \leq 5\%$. The particle phases 35 are uniformly dispersed in the matrix 34 of the sliding layer 32. In addition, the maximum particle diameter Da of the particle phases 35 is refined to be $0 \mu m < Da \leq 30 \mu m$. Therefore, the particle phases 35 uniformly and finely disperse in the sliding layer 32, and it is possible to enhance the sliding characteristics without impairing the strength of the sliding layer 32. Particularly, as the sliding characteristics of the sliding layer 32, seizure resistance and wear resistance can be enhanced.

In addition, the low-hardness phases may be present together with the high-hardness phases in the particle phases 35. In this case, the high-hardness phases and the low-hardness phases may be uniformly and finely present in the matrix 34 of the sliding layer 32. Furthermore, the low-hardness phases may be configured to be not necessarily dispersed in the matrix 34 uniformly and finely while the high-hardness phases are configured to be uniformly and finely present in the matrix 34 of the sliding layer 32. In a case where the low-hardness phases are not uniformly and finely dispersed in the matrix 34 as described above, the amount of the low-hardness phase added in the sliding layer 32 is preferably 20 mass% or less. When the amount of the low-hardness phase added is set to 20 mass% or less as described above, the influence on the strength of the sliding layer 32 is reduced. Furthermore, the sliding layer 32 may contain a solid lubricant regardless of the hardness. The solid lubricant is, for example, at least one selected from graphite, $MoS_2$ and the like. Hereinafter, the particle phases 35 are a collective term including the high-hardness phases and the low-hardness phases.

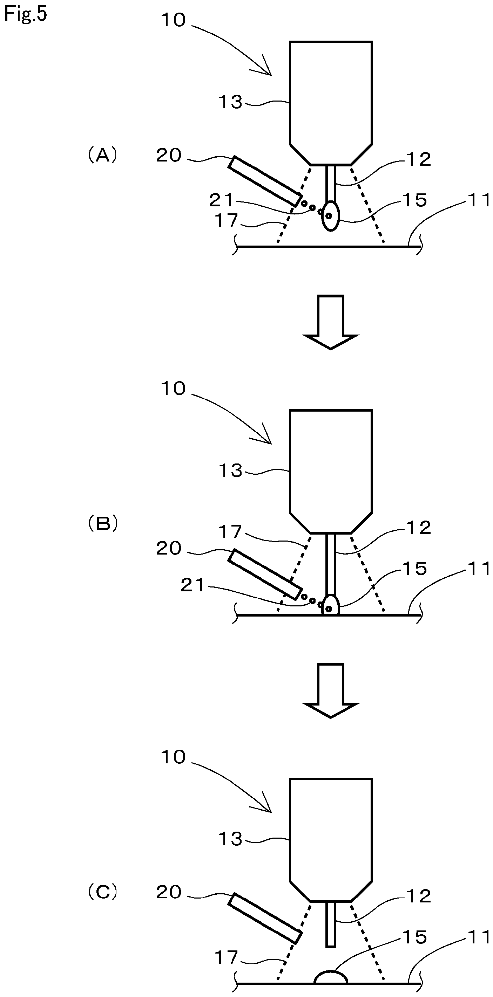

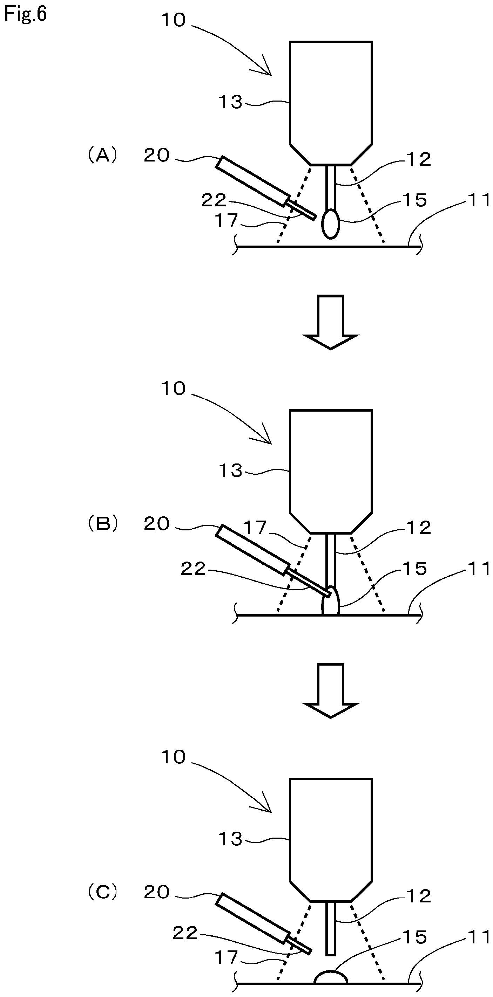

The wire 12 is supplied to the wire supply part 13 of the welding device 10 shown in Figure 1 and Figure 2. The wire 12 supplied to the wire supply part 13 melts by arc discharge between the base material 11 and the wire and forms the droplet 15 as shown in Figure 5(A) and Figure 6(A). To the formed droplet 15, the additive 21 is added. The additive 21 is added to the droplet 15 from the additive supply part 20. The additive 21 is added to the droplet 15 from the additive supply part 20 as particles of a material previously selected to be the particle phases 35 or a powder containing the particles of the material as shown in Figure 5(A). In addition, the additive 21 is added to the droplet 15 from the additive supply part 20 as the wire 22 containing the particles of the material or a bar containing the particles of the material as shown in Figure 6 (A).

The particle phases 35 including at least any one of the low-hardness phases and the high-hardness phases are formed of the additive 21 that is supplied from the additive supply part 20. That is, the additive 21 is added to the droplet 15 of the molten wire 12, whereby a variety of materials that are to turn into the particle phases 35 are mixed into the droplet 15 of the molten wire 12. In addition, when the droplet 15 transfers to the base material 11 as shown in Figure 5(B) and Figure 6(B), the droplet 15 in which the wire 12 is to be used as a material of the matrix 34 is laminated on the base material 11. When the droplet 15 solidifies as shown in Figure 5(C) and Figure 6(C), the sliding layer 32 is formed on the base material 11.

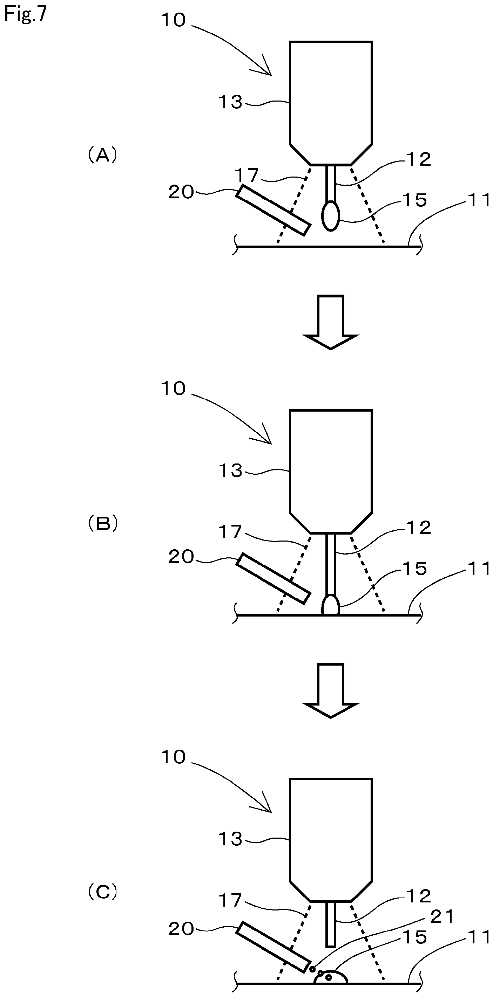

The sliding layer 32 is not limited to the above-described example and may also be formed as shown in Figure 7. In the case of an example shown in Figure 7, the wire 12 supplied to the wire supply part 13 melts by arc discharge between the base material 11 and the wire and forms the droplet 15 as shown in Figure 7(A). The formed droplet 15 transfers to the base material 11 as shown in Figure 7(B). In the case of the example shown in Figure 7, the additive supply part 20 adds the additive 21 to the droplet 15 that has transferred to the base material 11 and is in a molten state as shown in Figure 7(C). The additive 21 is added to the molten droplet 15, whereby a variety of materials that are to turn into the particle phases 35 are mixed into the droplet 15 of the molten wire 12. In addition, the droplet 15 solidifies, whereby the sliding layer 32 is formed on the base material 11. As shown in Figure 5 or Figure 7, a time at which the additive supply part 20 adds the additive 21 can be set between the formation of the droplet 15 by the arc and the solidification of the droplet on the base material 11.

These sliding layers 32 contain the particle phases 35 made of the additive 21 as a raw material in the matrix 34 as described above. In the case of the present embodiment, during the formation of the sliding layer 32, the additive 21 is added not to molten pools that are formed in the base material 11 by the arc between the base material 11 and the wire 12 but to the droplet 15 that is formed in the wire 12. Therefore, the additive 21 that is to turn into the particle phases 35 uniformly and finely disperses in the droplet 15 and also uniformly and finely disperses in the sliding layer 32 to be formed. This is because the droplet 15 is rapidly cooled by the dropping of the droplet 15 into the base material 11. That is, the additive 21 added to the droplet 15 is uniformly and finely mixed with the droplet 15 having a relatively small volume, then, drops into the base material 11 to be cooled and solidifies while maintaining the uniformly and finely mixed state.

In addition, the additive 21 is added to the droplet 15, whereby mixing with the base material 11 in the sliding layer 32 is reduced compared with a case where the additive 21 is added to molten pools. The molten pools are in a state where the wire 12 and the base material 11 are mixed together and melted. Therefore, for example, when the additive 21 is added to the molten pools, the additive 21 is mixed not only with the wire 12 that is to turn into the sliding layer 32 but also with the molten base material 11. In addition, for the base material 11, the wire 12 and the additive 21 that have been mixed together in the molten pools, the solidification rate becomes slow, and the additive 21 is likely to aggregate. Furthermore, for example, when the additive 21 is mixed with the wire 12 in advance, the temperature increases during the heating by the arc, and a defect is likely to be caused due to the evaporation of the additive 21 or the like.

In contrast, in the present embodiment, the additive 21 is added to the droplet 15 having a relatively small thermal capacity. Therefore, the particle phases 35 made of the additive 21 can be rapidly cooled in a state of being dispersed in the matrix 34 of the sliding layer 32. In addition, in the present embodiment, a defect that is accompanied by the evaporation of the additive 21 can be reduced.

The thickness T of the sliding layer 32 formed on the base material 11 by welding is set to be 0 mm < T ≤ 0.5 mm by, for example, machining such as cutting or grinding. When the sliding layer 32 is formed by welding as described above, the sliding layer 32 is not required to have a tensile strength compared with a case where, for example, a bushing or the like is used. Therefore, it is possible to make the thickness T of the sliding layer 32 as thin as 0.5 mm or less.

The sliding member 30 having the sliding layer 32 laminated on the base material 11 is manufactured by the above-described procedure.

The sliding member 30 includes the base material 11 and the sliding layer 32 as shown in Figure 3 and Figure 4. In the case of the present embodiment, the particle phases 35 made of the additive 21 are uniformly and finely dispersed in the matrix 34 as shown in Figure 4. The low-melting point metal such as Pb or Bi that is contained in the low-hardness phases of the particle phases 35 forms a Pb phase or a Bi phase that is flexible compared with the matrix 34 of the sliding layer 32. Therefore, the low-hardness phases of the particle phases 35 enhance foreign matter embeddability in a sliding portion during the sliding between the sliding member 30 and the mating material and contribute to improvement in the seizure resistance. On the other hand, the high-hardness phases of the particle phases 35 remove an adherent that is generated during the sliding between the sliding member 30 and the mating material. When a foreign matter such as an adherent generated by sliding in the sliding portion between the sliding member 30 and the mating material adheres to the mating material, the adherent and the sliding surface 33 of the sliding member 30 come into contact with each other, and there is a concern that seizure may be caused in the portion. The high-hardness phases, for example, $Mo_2C$, that are included in the sliding layer 32 scrape off the foreign matter that adheres to this sliding portion. Therefore, the high-hardness phases of the particle phases 35 contribute to reduction of seizure between the sliding member 30 and a mating member.

(Example of Carrying Out Sliding Member)

One example of carrying out the sliding member 30 was verified. As the example of carrying out, a sliding layer 32 was formed by arc welding using a wire 12 of a Cu alloy on a steel sheet that was to be a base material 11 using the welding device 10 shown in Figure 1. When the wire 12 was welded to the base material 11, a powdery additive 21 was supplied to a droplet 15 of the wire 12. The wire 12 was a Cu-Si-Mn alloy containing Cu as a main component, and the sliding layer 32 of the Cu-based alloy was formed. As the powder of an additive 21, Cu-22Pb-1.5Sn (mass%) was used. As a shielding gas 17, Ar containing 2 vol% of $O_2$ was used. A voltage that was to be applied between the base material 11 and the wire 12 was set to 14 V, and a welding current was set to 85 A. As a result, a structure in which Pb as particle phases 35 uniformly and finely dispersed in the sliding layer 32 as shown in Figure 4 was formed. The Pb phases were extremely fine and had diameters of 0.5 to 3 $\mu$m in an arbitrary cross section.

As described above, in the present embodiment, the additive 21 is added to the droplet 15 formed by the melting of the wire 12. Therefore, the particle phases 35 made of the additive 21 uniformly and finely disperse in the matrix 34 of the sliding layer 32 to be formed. Therefore, the sliding performance is further enhanced, and the sliding performance can be controlled as appropriate depending on the use by selecting the additive 21.

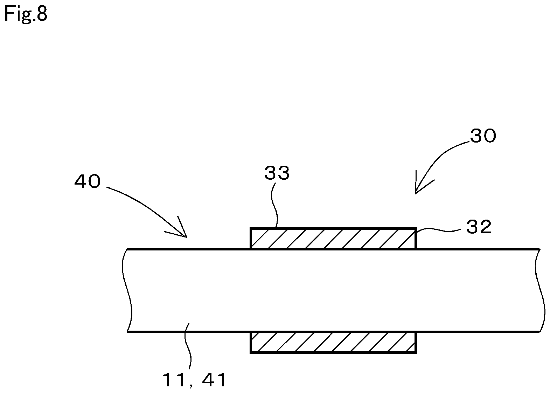

As shown in Figure 8, the sliding member 30 that is formed in the present embodiment can be suitably used in a large rotary member 40 having a high surface pressure, for example, a shaft or a bearing for wind powered generation. In the case of an example shown in Figure 8, the rotary member 40 includes the base material 11 and the sliding layer 32. The rotary member 40 includes a rotary shaft part 41 and the sliding layer 32. In addition, in the rotary member 40, the sliding layer 32 is directly provided on the rotary shaft part 41 made of the base material 11 by welding. That is, in the rotary member 40, the sliding layer 32 is laminated on the outer circumferential side of the rotary shaft part 41, which is a shaft member, made of the base material 11. These rotary shaft part 41 and sliding layer 32 configure the sliding member 30.

As described above, when the sliding layer 32 is directly provided on the rotary shaft part 41 by welding, it is possible to cope with a high surface pressure with the sliding member 30 including the sliding layer 32 having a controlled sliding performance.

Next, the sliding layer 32 will be described in detail.

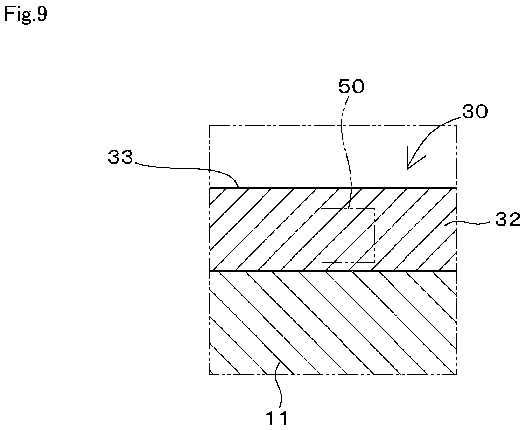

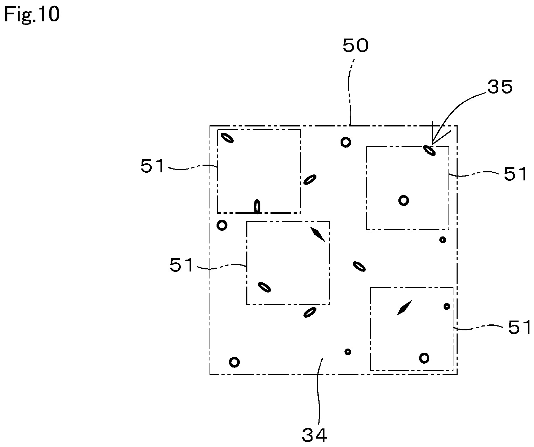

As described above, the sliding layer 32 has the matrix 34 and the particle phases 35. The area rate Sv of the particle phases 35 is $0.2\% \leq Sv \leq 5\%$. Specifically, in the sliding layer 32, an arbitrary observation cross section 50 is set as shown in Figure 9. The observation cross section 50 can be arbitrarily set in the sliding layer 32, for example, in the thickness direction or the like as shown in Figure 9. In the observation cross section 50 arbitrarily set in the sliding layer 32, the matrix 34 and the particle phases 35 are included as shown in Figure 10. Observation regions 51 are extracted from this observation cross section 50. A plurality of the observation regions 51 is extracted at arbitrary positions in the observation cross section 50. In this case, the observation region 51 is extracted from the observation cross section 50 as a region having sizes of 500 $\mu$m $\times$ 500 $\mu$m or more. When the observation region 51 is too small, there is a possibility that no particle phases 35 may be included in the observation region 51. That is, the observation region 51 needs to have a range large enough for the particle phases 35 to be included. The observation region 51 can be set to arbitrary dimensions as long as the dimensions are within the above-described range of 500 $\mu$m $\times$ 500 $\mu$m or more.

The area rate Sv of the particle phases 35 in this observation region 51 is 0.2% $\leq$ Sv $\leq$ 5%. The area rate Sv is calculated from Sv = Sm/S $\times$ 100 using the area S of the observation region 51 and the total Sm of the areas of the particle phases 35 that are included in this observation region 51. In the present embodiment, this area rate Sv is 0.2% $\leq$ Sv $\leq$ 5% in any of the plurality of arbitrary observation regions 51 extracted from the observation cross section 50. That is, the area rate Sv of the particle phases 35 is 0.2% $\leq$ Sv $\leq$ 5% in any of the observation regions 51. This indicates that the particle phases 35 have uniformly dispersed in the matrix 34 of the sliding layer 32. In addition, the maximum particle diameter Da of the particle phases 35 is 0 $\mu$m < Da $\leq$ 30 $\mu$m. The maximum particle diameter Da may be observed in the observation cross section 50 or may be observed in the observation region 51. In any case, the maximum particle diameter Da of the particle phases 35 that are included in the sliding layer 32 is 0 $\mu$m < Da $\leq$ 30 $\mu$m. As described above, it is indicated that the particle phases 35 that disperse in the matrix 34 of the sliding layer 32 are fine phases having a maximum particle diameter Da of 30 $\mu$m or less.

The volume proportion W of the particle phases 35 that are included in the sliding layer 32 is preferably 0.1 vol% $\leq$ W $\leq$ 5.0 vol%. The volume proportion W is the total of the volumes of the particle phases 35 with respect to the volume of the sliding layer 32. This volume proportion W is more preferably 0.2 vol% $\leq$ W $\leq$ 2.0 vol%. When the volume proportion W is 0.1 vol% or more, particularly, the high-hardness phases among the particle phases 35 further contribute to improvement in the seizure resistance. In addition, the upper limit of the volume proportion W is preferably set to 5.0 vol%. When the volume proportion W is set to 5.0 vol% or less, the aggressiveness toward the mating material is effectively suppressed.

The adhesive strength F between the base material 11 and the sliding layer 32 is preferably 250 N/mm$^2$ $\leq$ F. In a case where the adhesive strength F is secured as described above, the peeling of the sliding layer 32 from the base material 11 is reliably avoided even when the rotary shaft part 41 that is to turn into the base material 11 deflects. In addition, the depth Tt in the thickness direction up to which the base material 11 is affected by heat from the sliding layer 32 during the formation of the sliding layer 32 is preferably Tt $\leq$ 500 $\mu$m. The range where the base material 11 is affected by heat induced from welding is reduced by appropriately securing the temperature of the base material 11 during the welding. Therefore, the influence on the strength of the base material 11 decreases. That is, in the case of the present embodiment, the time during which the base material 11 is heated is extremely short, and the influence of heat on the base material 11 becomes small. Therefore, it is possible to decrease the change in the structure of the base material 11 by heat and the accompanying influence on the strength of the base material 11.

The roughness Ra on the surface of the sliding layer 32 is preferably Ra $\leq$ 0.6. Particularly, the roughness Ra on the surface of the sliding layer 32 is more preferably 0.3 $\leq$ Ra $\leq$ 0.6. When the roughness Ra on the surface of the sliding layer 32 is set as described above, it is possible to reduce machining man-hours and machining accuracy while reducing the friction coefficient of the sliding layer 32, and facility simplification accompanied by the reduction of machining accuracy can be achieved.

Hereinafter, specific Examples and Comparative Examples of the sliding member 30 will be described.

The Examples and the Comparative Examples were evaluated by an adhesion test and a sliding test. As a test piece, the sliding layer 32 was overlay-welded on the Fe-based base material 11 using the wire 12 and the additive 21. The sliding layer 32 was formed by MIG welding using a CMT method in which the wire 12 was repeatedly supplied forward and backward at a high rate to molten pools generated during the welding. After the welding, the test piece was made into a predetermined shape by machining such as cutting and grinding.

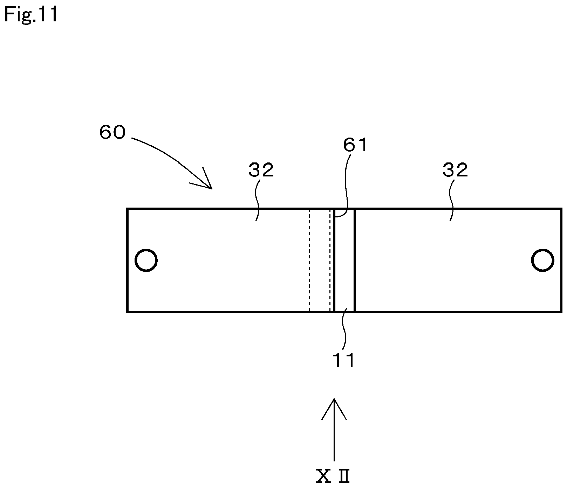

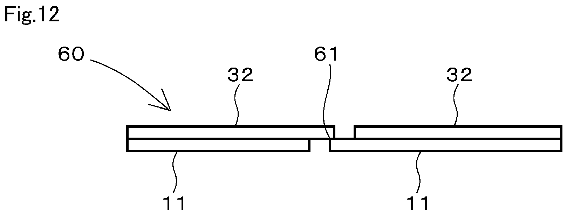

In the adhesion test, the adhesive strength was evaluated as the strength of the sliding member 30. The adhesive strength is the adhesive force between the base material 11 and the sliding layer 32. In the adhesion test, a test piece 60 in which the base material 11 and the sliding layer 32 were joined together across a predetermined joining area as shown in Figure 11 and Figure 12 was used. For the adhesive strength, a tensile load was applied to both ends of the test piece 60, and the maximum tensile force at which a joint part 61 broke was measured. In the test piece 60 used, the base material 11 and the sliding layer 32 overlap each other across 9 mm $\times$ 0.3 mm in the joint part 61, and the joint area is 2.7 mm$^2$. That is, the width of the test piece 60 is 9 mm, and the length of the overlapped portion is 0.3 mm. The adhesion test was performed by applying a load of 2 kN acting outward to both ends of the test piece 60 at a rate of 5 m/min.

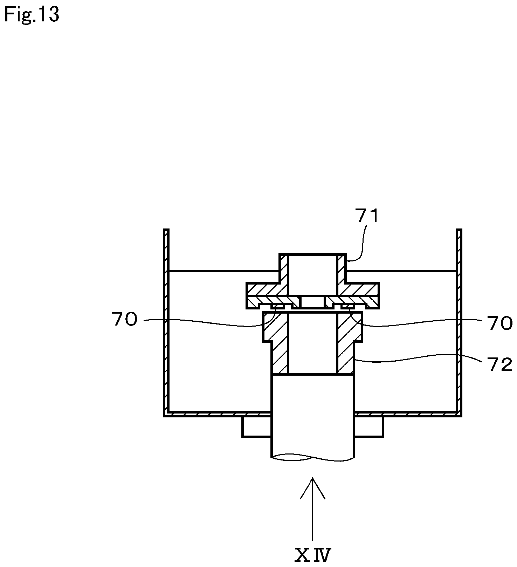

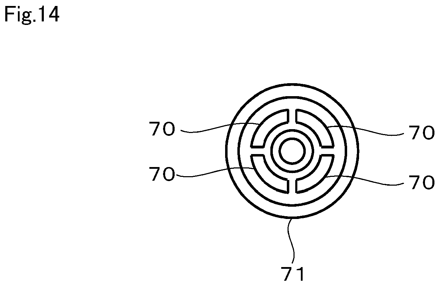

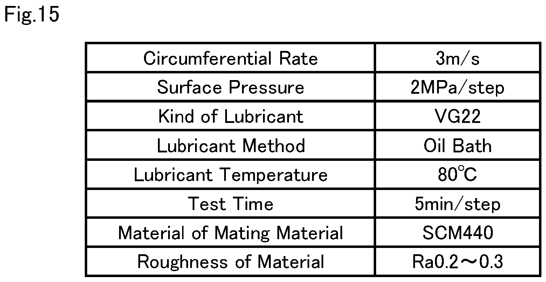

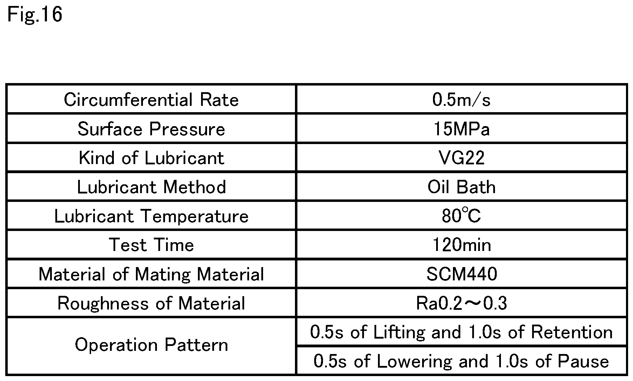

In the sliding test, seizure resistance by a seizure test and wear resistance by a wear test were evaluated as the strength and sliding characteristics of the sliding member 30. In the seizure test, the maximum surface pressure at which the sliding member 30 did not seize was evaluated as the seizure resistance. In the wear test, the wear amount of the sliding member 30 was evaluated as the wear resistance. The seizure test and the wear test in the sliding test were performed by installing a test piece 70 formed in a toric shape as shown in Figure 13 and Figure 14 in a holder 71 and pressing the test piece 70 installed in the holder 71 against a tubular testing shaft 72. In the sliding test, the Examples and Comparative Examples of the sliding member 30 were evaluated by the seizure test under conditions shown in Figure 15 and the wear test under conditions shown in Figure 16.

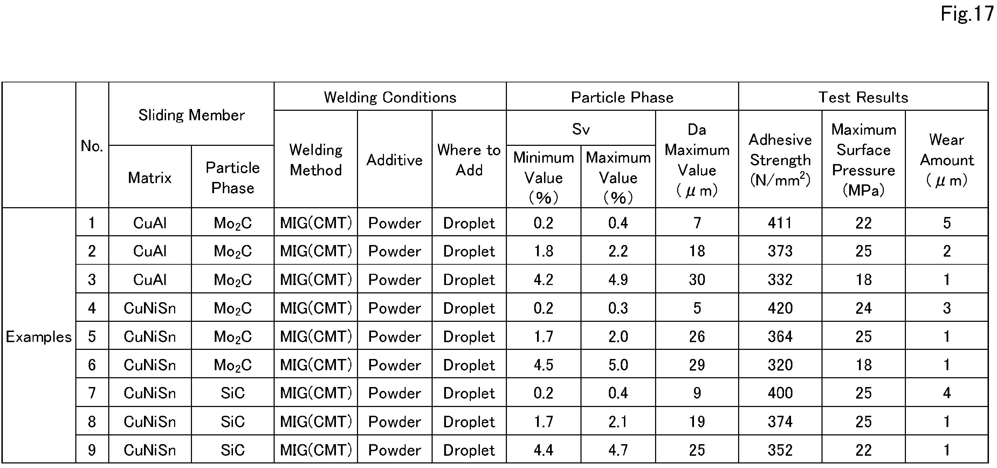

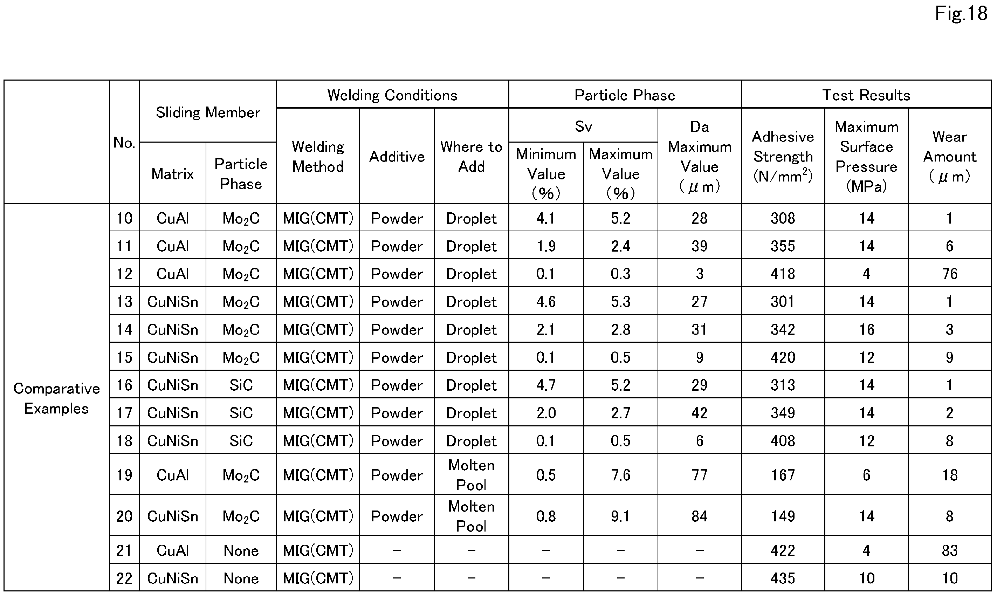

The evaluation results of the Examples and the Comparative Examples are shown in Figure 17 and Figure 18, respectively. For the area rate Sv of the particle phases 35, 10 observation regions 51 were arbitrarily extracted from an arbitrary observation cross section 50, and the maximum value and minimum value of the area rates Sv in each of the extracted observation regions 51 were calculated. That is, in the case of Figure 17 and Figure 18, the area rates Sv are the maximum values and the minimum values in the 10 observation regions 51. The maximum particle diameter Da of the particle phases 35 is the particle diameter of the largest particle phase 35 among the particle phases 35 in the 10 observation regions 51 extracted from the observation cross section 50. The observation region 51 was set to 500 $\mu$m $\times$ 500 $\mu$m. In the seizure test, a case where the maximum surface pressure at which the sliding member did not seize was 18 MPa or higher was evaluated as "PASS." In the wear test, a case where the wear amount was 5 $\mu$m or less was evaluated as "PASS." In the seizure test, the maximum value is 25 MPa due to the limitation in the performance of the testing device.

In all of Sample 1 to Sample 9, which are Examples, the adhesive strength, the maximum surface pressure and the wear amount are evaluated as PASS as shown in Figure 17. In contrast, in Sample 10, Sample 13 and Sample 16, which are Comparative Examples, the area rates Sv of the particle phases 35 are excessively large as shown in Figure 18. Therefore, it is found that, in Sample 10, Sample 13 and Sample 16, the wear amounts decrease, but the aggressiveness toward a mating material is high, and the seizure resistance is degraded. In addition, in Sample 11, Sample 14 and Sample 17, which are Comparative Examples, the particle phases 35 aggregate, and the maximum particle diameters Da are excessively large. Due to the aggregation of the particle phases 35, the seizure resistance and the wear resistance vary with places in the sliding layer 32. Therefore, it is found that, in Sample 11, Sample 14 and Sample 17, the distributions of the particle phases 35 in the matrix 34 are nonuniform and the seizure resistance and the wear resistance deteriorate.

In Sample 12, Sample 15 and Sample 18, which are Comparative Examples, the area rates Sv of the particle phases 35 that are included in the sliding layer 32 are excessively small. Therefore, it is found that, in these Sample 12, Sample 15 and Sample 18, improvement in the seizure resistance and the wear resistance cannot be expected. In Sample 19 and Sample 20, which are Comparative Examples, the additive 21 is added to the molten pools that are generated in the base material 11. Therefore, in Sample 19 and Sample 20, segregation in which the particle phases 35 are locally generated is caused. It is found that, in Sample 19 and Sample 20, the variations of the seizure resistance and the wear resistance increase due to this segregation. In Sample 21 and Sample 22, which are Comparative Example, the additive 21 is not added, and the particle phases 35 are not included in the sliding layer 32. Therefore, it is found that, in Sample 21 and Sample 22, the seizure resistance and the wear resistance deteriorate.

The present invention described above is not limited to the above-described embodiment and can be applied to a variety of embodiments within the scope of the subject matter of the present invention.

For example, the sliding member 30 may include an overlay layer, not shown, in addition to the base material 11 and the sliding layer 32. In this case, the overlayer layer is formed on the surface of the sliding layer 32, that is, on the surface opposite to the base material 11 to overlap the sliding layer 32. For the overlay layer, for example, a soft metal such as Sn or Bi or an alloy thereof is preferably used. In addition, for example, a resin in which a solid lubricant is dispersed or the like may be used for the overlay layer. When the sliding member 30 includes the overlay layer, the outermost surface of this overlay layer becomes the sliding surface 33 that slides over the mating material. Furthermore, the sliding member 30 may include one or more interlayers, not shown, between the base material 11 and the sliding layer 32. In this case, for the interlayer, a material that increases the adhesive force between the base material 11 and the sliding layer 32, for example, Ni, an alloy thereof or the like, is preferably used.

## Claims

1. A sliding member comprising:

   a base material; and
   a sliding layer that is laminated on the base material and has a matrix and particle phases uniformly and finely dispersed in the matrix,
   wherein, when an arbitrary observation cross section is set in the sliding layer, and a plurality of observation regions having sizes of 500 $\mu$m $\times$ 500 $\mu$m or more are extracted from the observation cross section, area rates Sv of the particle phases in the plurality of observation regions are $0.2\% \leq Sv \leq 5\%$ in all of the observation regions, and
   a maximum particle diameter Da of the particle phases is $0\ \mu m < Da \leq 30\ \mu m$.

2. The sliding member according to Claim 1, wherein, in the matrix, any element of Cu, Al and Sn is a first component.

3. The sliding member according to Claim 1, wherein the particle phases include a high-hardness phase having higher hardness than the matrix.

4. The sliding member according to Claim 3, wherein, when Vickers hardness of the particle phase is indicated by HV1 and Vickers hardness of the matrix is indicated by HV2, $5 \leq HV1/HV2 \leq 50$ is satisfied.

5. The sliding member according to Claim 3, wherein the high-hardness phase is
at least one element selected from Ni, Sn, Mo, C, B, Si, Mn, Fe, P, Ti, Al, W, Cr, Sc, Zr, Co and Cu, a compound thereof or a compound with O or N.

6. The sliding member according to Claim 3, wherein a volume proportion W of the high-hardness phase in the sliding layer is

$$0.1 \text{ vol\%} \leq W \leq 5.0 \text{ vol\%}.$$

7. The sliding member according to Claim 1, wherein the particle phases include a low-hardness phase having lower hardness than the matrix.

8. The sliding member according to Claim 1, wherein an adhesive strength F between the base material and the sliding layer is

$$250 \text{ N/mm}^2 \leq F.$$

9. The sliding member according to Claim 1, wherein a thickness T of the sliding layer is

$$0 \text{ mm} < T \leq 0.5 \text{ mm}.$$

10. The sliding member according to Claim 1, wherein a thickness Tt in a thickness direction up to which the base material is affected by heat from the sliding layer is

$$Tt \leq 500 \text{ μm}.$$

11. The sliding member according to Claim 1, wherein roughness Ra on a surface of the sliding layer is $Ra \leq 0.6$.

12. The sliding member according to Claim 11, wherein the roughness Ra is

$$0.3 \leq Ra \leq 0.6.$$

13. A gear box comprising:

the sliding member according to any one of Claims 1 to 12,
wherein the base material is a shaft member, and the sliding layer is laminated on an outer circumferential side of the shaft member.

14. A wind powered generator comprising:
the gear box according to Claim 13.

15. A method for manufacturing a sliding member in which a sliding layer is formed by arc welding of a wire to a base material, the method comprising:

a step of supplying the wire that is to turn into a matrix configuring the sliding layer;
a step of melting the supplied wire by discharge with the base material to form a droplet; and
a step of adding an additive that is to be added to the matrix to the formed droplet.

16. The method for manufacturing a sliding member according to Claim 15, wherein the additive that is to be added to the matrix is added to the droplet as a particle, a powder containing the particle, a wire containing the particle or a bar containing the particle.

17. The method for manufacturing a sliding member according to Claim 15, further comprising:
a step of making a thickness of the sliding layer be 0.5 mm or less by machining after the sliding layer is formed.

Fig.1

Fig.2

Fig.3

Fig.4

Fig.5

(A)

(B)

(C)

Fig.6

(A)

(B)

(C)

Fig.7

(A)

(B)

(C)

Fig.8

Fig.9

Fig.10

Fig.11

Fig.12

Fig.13

Fig.14

70

70

70

70

71

Fig.15

| Circumferential Rate | 3m/s |
|---|---|
| Surface Pressure | 2MPa/step |
| Kind of Lubricant | VG22 |
| Lubricant Method | Oil Bath |
| Lubricant Temperature | 80°C |
| Test Time | 5min/step |
| Material of Mating Material | SCM440 |
| Roughness of Material | Ra0.2～0.3 |

Fig.16

| Circumferential Rate | 0.5m/s | |
|---|---|---|
| Surface Pressure | 15MPa | |
| Kind of Lubricant | VG22 | |
| Lubricant Method | Oil Bath | |
| Lubricant Temperature | 80℃ | |
| Test Time | 120min | |
| Material of Mating Material | SCM440 | |
| Roughness of Material | Ra0.2～0.3 | |
| Operation Pattern | 0.5s of Lifting and 1.0s of Retention | |
| | 0.5s of Lowering and 1.0s of Pause | |

Fig.17

EP 4 502 409 A1

| | No. | Sliding Member | | Welding Conditions | | | Particle Phase | | | Test Results | | |
| --- | --- | --- | --- | --- | --- | --- | --- | --- | --- | --- | --- | --- |
| | | | | | | | Sv | | Da Maximum Value ($\mu$m) | Adhesive Strength (N/mm$^2$) | Maximum Surface Pressure (MPa) | Wear Amount ($\mu$m) |
| | | Matrix | Particle Phase | Welding Method | Additive | Where to Add | Minimum Value (%) | Maximum Value (%) | | | | |
| Examples | 1 | CuAl | Mo$_2$C | MIG(CMT) | Powder | Droplet | 0.2 | 0.4 | 7 | 411 | 22 | 5 |
| | 2 | CuAl | Mo$_2$C | MIG(CMT) | Powder | Droplet | 1.8 | 2.2 | 18 | 373 | 25 | 2 |
| | 3 | CuAl | Mo$_2$C | MIG(CMT) | Powder | Droplet | 4.2 | 4.9 | 30 | 332 | 18 | 1 |
| | 4 | CuNiSn | Mo$_2$C | MIG(CMT) | Powder | Droplet | 0.2 | 0.3 | 5 | 420 | 24 | 3 |
| | 5 | CuNiSn | Mo$_2$C | MIG(CMT) | Powder | Droplet | 1.7 | 2.0 | 26 | 364 | 25 | 1 |
| | 6 | CuNiSn | Mo$_2$C | MIG(CMT) | Powder | Droplet | 4.5 | 5.0 | 29 | 320 | 18 | 1 |
| | 7 | CuNiSn | SiC | MIG(CMT) | Powder | Droplet | 0.2 | 0.4 | 9 | 400 | 25 | 4 |
| | 8 | CuNiSn | SiC | MIG(CMT) | Powder | Droplet | 1.7 | 2.1 | 19 | 374 | 25 | 1 |
| | 9 | CuNiSn | SiC | MIG(CMT) | Powder | Droplet | 4.4 | 4.7 | 25 | 352 | 22 | 1 |

Fig.18

| | No. | Sliding Member | | Welding Conditions | | | Particle Phase | | | Test Results | | |
|---|---|---|---|---|---|---|---|---|---|---|---|---|
| | | | | | | | Sv | | Da Maximum Value ($\mu$m) | | | |
| | | Matrix | Particle Phase | Welding Method | Additive | Where to Add | Minimum Value (%) | Maximum Value (%) | | Adhesive Strength (N/mm²) | Maximum Surface Pressure (MPa) | Wear Amount ($\mu$m) |
| Comparative Examples | 10 | CuAl | Mo$_2$C | MIG(CMT) | Powder | Droplet | 4.1 | 5.2 | 28 | 308 | 14 | 1 |
| | 11 | CuAl | Mo$_2$C | MIG(CMT) | Powder | Droplet | 1.9 | 2.4 | 39 | 355 | 14 | 6 |
| | 12 | CuAl | Mo$_2$C | MIG(CMT) | Powder | Droplet | 0.1 | 0.3 | 3 | 418 | 4 | 76 |
| | 13 | CuNiSn | Mo$_2$C | MIG(CMT) | Powder | Droplet | 4.6 | 5.3 | 27 | 301 | 14 | 1 |
| | 14 | CuNiSn | Mo$_2$C | MIG(CMT) | Powder | Droplet | 2.1 | 2.8 | 31 | 342 | 16 | 3 |
| | 15 | CuNiSn | Mo$_2$C | MIG(CMT) | Powder | Droplet | 0.1 | 0.5 | 9 | 420 | 12 | 9 |
| | 16 | CuNiSn | SiC | MIG(CMT) | Powder | Droplet | 4.7 | 5.2 | 29 | 313 | 14 | 1 |
| | 17 | CuNiSn | SiC | MIG(CMT) | Powder | Droplet | 2.0 | 2.7 | 42 | 349 | 14 | 2 |
| | 18 | CuNiSn | SiC | MIG(CMT) | Powder | Droplet | 0.1 | 0.5 | 6 | 408 | 12 | 8 |
| | 19 | CuAl | Mo$_2$C | MIG(CMT) | Powder | Molten Pool | 0.5 | 7.6 | 77 | 167 | 6 | 18 |
| | 20 | CuNiSn | Mo$_2$C | MIG(CMT) | Powder | Molten Pool | 0.8 | 9.1 | 84 | 149 | 14 | 8 |
| | 21 | CuAl | None | MIG(CMT) | – | – | – | – | – | 422 | 4 | 83 |
| | 22 | CuNiSn | None | MIG(CMT) | – | – | – | – | – | 435 | 10 | 10 |

## INTERNATIONAL SEARCH REPORT

| International application No. |
| --- |
| **PCT/JP2023/012552** |

### A. CLASSIFICATION OF SUBJECT MATTER

*F16C 33/12*(2006.01)i; *F16C 33/14*(2006.01)i; *C23C 4/131*(2016.01)i; *B23K 9/04*(2006.01)i
FI: F16C33/12 A; B23K9/04 A; F16C33/14 Z; C23C4/131

According to International Patent Classification (IPC) or to both national classification and IPC

### B. FIELDS SEARCHED

Minimum documentation searched (classification system followed by classification symbols)

F16C17/00-F16C17/26; F16C33/00-F16C33/28; C23C4/00-C23C6/00; B23K9/04

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | JP 61-12844 A (NISSAN MOTOR CO., LTD.) 21 January 1986 (1986-01-21) p. 3, upper left column, line 6 to p. 3, lower right column, line 7, p. 4, table 1, p. 5, lower right column, line 1 to p. 6, upper left column, line 3, p. 7, upper right column, line 4 to p. 7, lower right column, line 3, fig. 6 | 1-14 |
| Y | WO 2016/079812 A1 (KOMATSU LTD.) 26 May 2016 (2016-05-26) paragraphs [0031], [0032], [0041]-[0045], fig. 8-11 | 15-17 |
| Y | JP 8-318369 A (HIROSE KOGYO KK) 03 December 1996 (1996-12-03) paragraphs [0007]-[0010], fig. 3 | 15-17 |
| A | JP 2007-30019 A (JFE STEEL CORP.) 08 February 2007 (2007-02-08) paragraphs [0010], [0014], [0016], fig. 3 | 15-17 |
| A | JP 10-280120 A (FORD GLOBAL TECHNOLOGIES, INC.) 20 October 1998 (1998-10-20) | 15-17 |
| A | JP 8-47774 A (KOMATSU LTD.) 20 February 1996 (1996-02-20) | 1-17 |

☐ Further documents are listed in the continuation of Box C.    ☑ See patent family annex.

| | |
| --- | --- |
| *   Special categories of cited documents: <br> "A"   document defining the general state of the art which is not considered to be of particular relevance <br> "E"   earlier application or patent but published on or after the international filing date <br> "L"   document which may throw doubts on priority claim(s) or which is cited to establish the publication date of another citation or other special reason (as specified) <br> "O"   document referring to an oral disclosure, use, exhibition or other means <br> "P"   document published prior to the international filing date but later than the priority date claimed | "T"   later document published after the international filing date or priority date and not in conflict with the application but cited to understand the principle or theory underlying the invention <br> "X"   document of particular relevance; the claimed invention cannot be considered novel or cannot be considered to involve an inventive step when the document is taken alone <br> "Y"   document of particular relevance; the claimed invention cannot be considered to involve an inventive step when the document is combined with one or more other such documents, such combination being obvious to a person skilled in the art <br> "&"   document member of the same patent family |

| Date of the actual completion of the international search | Date of mailing of the international search report |
| --- | --- |
| **08 May 2023** | **23 May 2023** |

| Name and mailing address of the ISA/JP | Authorized officer |
| --- | --- |
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

## INTERNATIONAL SEARCH REPORT
### Information on patent family members

International application No.

**PCT/JP2023/012552**

| Patent document cited in search report | | | Publication date (day/month/year) | Patent family member(s) | | | Publication date (day/month/year) |
|---|---|---|---|---|---|---|---|
| JP | 61-12844 | A | 21 January 1986 | (Family: none) | | | |
| WO | 2016/079812 | A1 | 26 May 2016 | US paragraphs [0050], [0051], [0060]-[0066], fig. 8-11 CN | 2017/0216950 107073621 | A1 A | |
| JP | 8-318369 | A | 03 December 1996 | (Family: none) | | | |
| JP | 2007-30019 | A | 08 February 2007 | (Family: none) | | | |
| JP | 10-280120 | A | 20 October 1998 | US EP | 5820939 0869198 | A A1 | |
| JP | 8-47774 | A | 20 February 1996 | US WO EP CA | 5852272 96/04097 0726117 2634285 | A A1 A1 A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022056211 A

- JP 4300073 A